# EUROPEAN PATENT APPLICATION

(11) **EP 3 742 755 A1**
(43) Date of publication of application: **25.11.2020**
(21) Application number: 19214060.6
(22) Date of filing: 06.12.2019
(51) Int. Cl.: H04R 1/10, G02C 5/14, G02C 11/00

(54) **DETACHABLE MODULE FOR GLASSES**

(30) Priority: 24.05.2019 KR 20190061092
(71) Applicant: Park, Tae Soo, Busan 46539 (KR)
(72) Inventor: Park, Tae Soo, Busan 46539 (KR)
(74) Representative: Frenkel, Matthias Alexander

(57) **Abstract**

Disclosed is a detachable module including a sliding member having a first fixing portion provided on a first surface of the detachable module, a sound output unit configured to output sound, a coupling unit having one end coupled to the sound output unit, and the other end coupled to one region of the first surface of the sliding member, a housing configured to be detachably attached to a temple of glasses and having an accommodation space configured to accommodate the sliding member, and an opening portion opened to communicate with the accommodation space and allow the coupling unit to pass therethrough, wherein the accommodation space has a second fixing portion configured to be engaged with the first fixing portion, and an elastic member disposed on a second surface of the sliding member, facing the first surface of the sliding member, and configured to provide elastic force to the sliding member so as to maintain the engagement between the first fixing portion and the second fixing portion.

## Description

### CROSS-REFERENCE TO RELATED APPLICATIONS

This application claims priority to and the benefit of Korean Patent Application No. 10-2019-0061092 filed in the Korean Intellectual Property Office on May 24, 2019, the entire contents of which are incorporated herein by reference.

### TECHNICAL FIELD

The present disclosure relates to a detachable module for glasses.

### BACKGROUND ART

Many people may listen to desired music anytime and anywhere in virtue of the dazzling development of technologies associated with digital acoustic devices. Further, most earphones or headphones use air conductivity as an output method of the digital acoustic device.

However, there still remains a problem in that because the air-conduction earphones or headphones are inserted into the ears when being used, the sound around a user is blocked, which may cause a safety accident. Therefore, some advanced countries legally regulate the wearing of the air-conduction earphones or headphones, which clog the ears when being used, and the listening to the music or the like on the road.

Therefore, studies are being conducted on sound output devices capable of allowing the users to receive sound from the acoustic devices while sufficiently hearing peripheral noise, thereby preventing safety accidents. As representative examples of the sound output devices, there are bone-conduction headphones or bone-conduction earphones.

The bone-conduction headphones may be worn close to the user's auricles and may transmit the sound to the inner ears through vibration of bone and skin. In addition, because of the nature of the bone-conduction headphones or earphones capable of transmitting the sound through vibration, the bone-conduction headphones or earphones are highly advantageous in that even people with problems with outer ears and middle ears, i.e., people with hearing impairments can hear the sound.

However, because of a lack of demands for the bone-conduction headphones compared to the air-conduction earphones and headphones, the bone-conduction headphones have not yet been actively developed. In particular, the bone-conduction headphones need to be worn close to the auricles, which may cause great inconvenience to people wearing glasses. Further, because the proportion of people wearing glasses in Korea exceeds 50%, the problems with the glasses need to be solved to ensure marketability of the bone-conduction headphones.

### [Documents of Related Art]

### [Patent Document]

Japanese Patent Application Laid-Open No. 1998-030937

### SUMMARY OF THE INVENTION

The present disclosure has been made in an effort to provide a detachable module for glasses.

Technical problems of the present disclosure are not limited to the aforementioned technical problems, and other technical problems, which are not mentioned above, may be clearly understood by those skilled in the art from the following descriptions.

The present disclosure has been made in an effort to provide a detachable module for glasses. An exemplary embodiment of the present disclosure provides a detachable module including a sliding member having a first fixing portion provided on a first surface of the detachable module, a sound output unit configured to output sound, a coupling unit having one end coupled to the sound output unit, and the other end coupled to one region of the first surface of the sliding member, a housing configured to be detachably attached to a temple of glasses and having an accommodation space configured to accommodate the sliding member, and an opening portion opened to communicate with the accommodation space and allow the coupling unit to pass therethrough, wherein the accommodation space has a second fixing portion configured to be engaged with the first fixing portion, and an elastic member disposed on a second surface of the sliding member, facing the first surface of the sliding member, and configured to provide elastic force to the sliding member so as to maintain the engagement between the first fixing portion and the second fixing portion.

The second fixing portion may be provided on a first inner surface of the accommodation space in which the opening portion is provided, and the elastic member may be positioned on a second inner surface of the accommodation space that faces the first inner surface of the accommodation space.

A shape of the second fixing portion may correspond to a shape of the first fixing portion.

The first fixing portion may include teeth formed on the first surface of the sliding member, and the second fixing portion may include teeth formed on the first inner surface in the accommodation space.

The housing may define a L-shaped external appearance, and when the housing is attached to the glasses, the opening portion may be positioned in a front surface of the housing where the glasses are positioned.

The sliding member may have a guide portion formed in the second surface in a vertical direction of the sliding member, and the elastic member may be inserted into the guide portion.

The sliding member may slide in a first direction along the guide portion or in a second direction opposite to the first direction when external force is applied in a direction from the sound output unit to the housing and the first fixing portion and the second fixing portion are disengaged from each other.

A vertical length of the accommodation space may be longer than a vertical length of the sliding member.

The elastic member may include at least one flat spring having an arcuate shape.

A vertical length of the first fixing portion may be shorter than a vertical length of the second fixing portion.

A vertical length of a cross-sectional area of the coupling unit may be shorter than a vertical length of the opening portion.

The technical solutions obtained by the present disclosure are not limited to the aforementioned technical solutions, and other technical solutions, which are not mentioned above, will be clearly understood by those skilled in the art from the following description.

The present disclosure may provide the detachable module in which the position of the sound output unit may be shifted.

The effects obtained by the present disclosure are not limited to the aforementioned effects, and other effects, which are not mentioned above, will be clearly understood by those skilled in the art from the following description.

### BRIEF DESCRIPTION OF THE DRAWINGS

Various aspects will be described with reference to the drawings, in which similar reference numerals are used to refer to similar components. In the following examples, for purposes of explanation, multiple specific details are set forth in order to provide a thorough understanding of one or more aspects. However, it will be apparent that such aspect(s) may be practiced without the specific details.
FIG. 1 is a schematic view for explaining a state in which detachable modules according to several exemplary embodiments of the present disclosure are attached to glasses.
FIG. 2 is a view for explaining an internal structure of the detachable module according to the several exemplary embodiments of the present disclosure.
FIG. 3 is an exploded perspective view of a sound output unit, a coupling unit, and a sliding member according to the several exemplary embodiments of the present disclosure.
FIG. 4 is a view for explaining a housing of the detachable module according to the several exemplary embodiments of the present disclosure.
FIG. 5 is a view for explaining an example of a method of providing fixing force to the sound output unit according to the several exemplary embodiments of the present disclosure.
FIG. 6 is a view for explaining an example of a method of moving the sound output unit according to the several exemplary embodiments of the present disclosure.

### DETAILED DESCRIPTION

Various exemplary embodiments and/or various aspects will be disclosed with reference to the drawings. In the following descriptions, for explanation, multiple specific details are disclosed in order to provide overall understandings of one or more aspects. However, it will also be appreciated by those skilled in the art that this aspect(s) may be practiced without these specific details. The following descriptions and the accompanying drawings are provided for disclosing specific exemplary aspects of the one or more aspects in detail. However, these aspects are exemplary. Thus, some of the various methods in the principles of the various aspects may be used, and the descriptions are intended to include all such aspects and their equivalents. Specifically, "an exemplary embodiment", "an example", "an aspect", and the like used in this specification may not be construed as any aspect or design described being better or advantageous than other aspects or designs.

Hereinafter, the same or similar constituent elements are assigned with the same reference numerals regardless of reference numerals, and the repetitive description thereof will be omitted. In addition, in the description of the exemplary embodiment disclosed in the present specification, the specific descriptions of publicly known related technologies will be omitted when it is determined that the specific descriptions may obscure the subject matter of the exemplary embodiment disclosed in the present specification. In addition, the accompanying drawings are provided only to allow those skilled in the art to easily understand the exemplary embodiments disclosed in the present specification, and the technical spirit disclosed in the present specification is not limited by the accompanying drawings.

Terms "first", "second", and the like may be used to describe various elements and components, but the elements and components are of course not limited by these terms. These terms are merely used to distinguish one element or component from another element or component. Therefore, the first element or component mentioned hereinafter may of course be the second element or component within the technical spirit of the present disclosure.

Unless otherwise defined, all terms (including technical and scientific terms) used in the present specification may be used as the meaning which may be commonly understood by the person with ordinary skill in the art, to which the present disclosure belongs. In addition, terms defined in a generally used dictionary shall not be construed in ideal or excessively formal meanings unless they are clearly and specially defined in the present specification.

The term of "or" is intended to mean not an exclusive "or" but an inclusive "or". That is, unless specified or clear in context, "X uses A or B" is intended to mean one of the natural implicit substitutions. That is, "X uses A or B" can be applied to any of the cases where X uses A, X uses B, or X uses both A and B. Moreover, it is to be understood that the term of "and/or" used in this specification refers to and includes all possible combinations of one or more of the listed related items.

It is to be understood that the terms of "comprises" and/or "comprising" mean that the feature and/or a component is provided, but one or more other features, other components and/or the presence or addition of groups thereof are not excluded. In addition, unless specified or clear in the context of indicating a singular form, the singular in this specification and claims should generally be construed to mean "one or more".

The terms "information" and "data" used in the present specification may sometimes be interchangeably used.

When one constituent element is described as being "connected" or "coupled" to another constituent element, it should be understood that one constituent element can be connected or coupled directly to another constituent element, and an intervening constituent element can also be present between the constituent elements. When one constituent element is described as being "connected directly to" or "coupled directly to" another constituent element, it should be understood that no intervening constituent element is present between the constituent elements.

The suffixes "module" and "unit" used to describe some constituent elements in the following description are used together or interchangeably in order to facilitate the description, but the suffixes themselves do not have distinguishable meanings or functions.

When an element or layer is referred to as being "on" another element or layer, it can be directly on the other element or layer or intervening elements or layers may be present. In contrast, when an element is referred to as being "directly on" another element or layer, there are no intervening elements or layers present.

Spatially relative terms, such as "below," "beneath," "lower," "above," "upper," and the like, may be used herein for ease of description to describe one constituent element or a correlation between one constituent element and other constituent elements, as illustrated in the drawings. It should be understood that the spatially relative terms encompass different orientations of the elements in use or operation in addition to the orientation depicted in the drawings.

For example, if the constituent element in the drawings is turned over, the constituent element described as "below" or "beneath" the other constituent element may then be oriented "above" the other constituent element. Thus, the exemplary term "below" can encompass both orientations of above and below. The constituent elements may be oriented in different directions, and the spatially relative terms used herein may be interpreted in accordance with the orientations.

Objects and effects of the present disclosure and technical constituent elements for achieving the objects and effects will be clear with reference to the exemplary embodiments described in detail below together with the accompanying drawings. In addition, in the description of the present disclosure, the specific descriptions of publicly known functions or configurations will be omitted when it is determined that the specific descriptions may unnecessarily obscure the subject matter of the present disclosure. In addition, the terms used herein are defined considering the functions in the present disclosure and may vary depending on the intention or usual practice of a user or an operator.

However, the present disclosure is not limited to the exemplary embodiments disclosed herein but will be implemented in various forms. The exemplary embodiments of the present disclosure are provided so that the present disclosure is completely disclosed, and a person with ordinary skill in the art can fully understand the scope of the present disclosure. The present disclosure will be defined only by the scope of the appended claims. Therefore, the definition of the terms should be made based on the entire contents of the technology of the present specification.

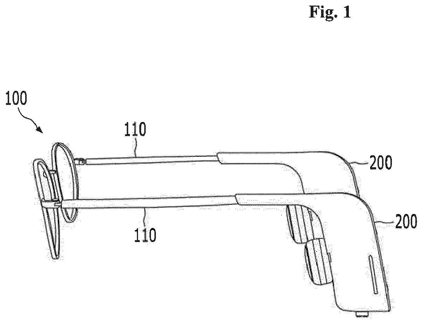

FIG. 1 is a schematic view for explaining a state in which detachable modules according to several exemplary embodiments of the present disclosure are attached to glasses.

Referring to FIG. 1, glasses 100 attached with detachable modules may include temples 110 and detachable modules 200. However, the above-mentioned constituent elements are not essential to implement the glasses 100 attached with the detachable modules. The glasses 100 attached with the detachable modules may have the constituent elements larger or smaller in number than the constituent elements listed above.

The respective temples 110 of the glasses may be rotatably connected to both sides of a lens frame by hinges. Here, the temples 110 may be leg parts of the glasses. In addition, the respective temples 110 may be hung on a user's two ears when the user wears the glasses 100 attached with the detachable modules.

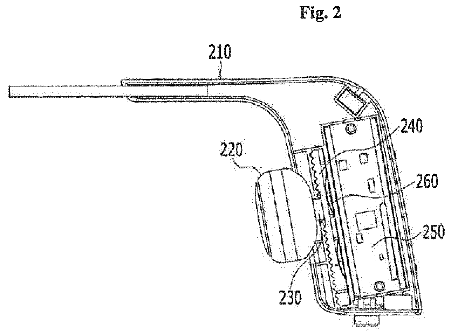

Meanwhile, the detachable module 200 may be coupled to a portion where a tip of the temple 110 is positioned. Here, the detachable module 200 may be a module capable of providing sound to the user through a sound output unit 220 (FIG. 2) to be described below.

In the present disclosure, the glasses may have the detachable modules 200 instead of the tips. Further, the detachable modules 200 may be hung on the user's two ears when the user wears the glasses.

In the present disclosure, the pair of detachable modules 200 is provided in shapes symmetrical about the vertical axis.

Specifically, the detachable module 200 configured to be worn on the left ear may be coupled to a left temple 110 of the glasses, and the detachable module 200 configured to be worn on the right ear may be coupled to a right temple 110 of the glasses. In this case, each of the detachable modules 200 may be formed such that the sound output unit 220 is in close contact with the user's ear.

Specifically, the detachable module 200 to be worn on the right ear may be coupled to the temple 110 provided at the right side of the glasses. Further, the detachable module 200 may be formed such that the other end of the detachable module 200 coupled to the right temple 110 may be curved toward the user's cranium from one end to the other end of the detachable module 200 when the user wears the glasses in the state in which the detachable module 200 is coupled to the temple 110. Therefore, the sound output unit 220 provided on the detachable module 200 coupled to the right temple 110 may be in close contact with a rear portion of the auricle of the user's right ear. In addition, the detachable module 200 to be worn on the left ear may be symmetrical in shape to the detachable module 200 to be worn on the right ear. However, the shape of the detachable module 200 is not limited thereto.

According to the several exemplary embodiments of the present disclosure, the detachable module 200 to be worn on the left ear and the detachable module 200 worn on the right ear may include the sound output units 220, respectively. Further, each of the sound output units 220 may be disposed to be directed toward the position of the lens frame. Therefore, each of the sound output units 220 may be in close contact with one region of a rear surface of the user's auricle when the user wears the glasses 100 attached with the detachable modules.

Specifically, the sound output unit 220 provided on the right detachable module 200 may be in close contact with one region of the rear surface of the auricle of the user's right ear in the state in which the left temple 110 and the right temple 110 are hung on the user's two ears.

The sound output unit 220 provided on the left detachable module 200 may be in close contact with one region of the rear surface of the auricle of the user's left ear in the state in which the left temple 110 and the right temple 110 are hung on the user's two ears. However, the shape of the sound output unit 220 is not limited thereto.

In the case in which the detachable module 200 is in close contact with one region of the rear surface of the user's auricle as described above, the user may receive the outputted sound with the user's ear opened (i.e., in a state in which the earphones are not inserted into the lugholes), such that the user may recognize peripheral noise (e.g., sound of a vehicle horn or the like) together with the sound. Therefore, the user may prevent an unexpected safety accident. In addition, the eardrum may not be directly affected, thereby preventing hearing impairment.

Meanwhile, in the case in which the detachable modules 200 having the sound output units 220 are coupled to the glasses as described above, the user wearing the glasses may not carry a separate sound output device to listen to music or the like.

Meanwhile, according to the present disclosure, the sound output unit 220 provided on the detachable module 200 may be slid in a vertical direction. That is, the user may slide the sound output unit 220 to a position suitable for his/her ear when the user wears the glasses 100 attached with the detachable modules.

Hereinafter, a method of sliding the sound output unit 220 of the detachable module 200 will be described with reference to FIG. 2.

FIG. 2 is a view for explaining an internal structure of the detachable module according to the several exemplary embodiments of the present disclosure.

Referring to FIG. 2, the detachable module 200 may include a housing 210, the sound output unit 220, a coupling unit 230, a sliding member 240, an electrical unit 250, and an elastic member 260. However, the above-mentioned constituent elements are not essential to implement the detachable module 200. The detachable module 200 may have the constituent elements larger or smaller in number than the constituent elements listed above.

The housing 210 defines an external appearance of the detachable module 200 and may be detachably attached to the temple of the glasses. In addition, the housing 210 may have an external appearance having a L-shape in order to correspond in function to the tip of the glasses. In addition, the housing 210 may be made of by coupling the pair of symmetrical housings 210. However, the shape of the housing 210 is not limited to the above-mentioned example, and the housing 210 may be configured as the single housing.

Meanwhile, the detachable module 200 may have the sound output unit 220 that outputs the sound.

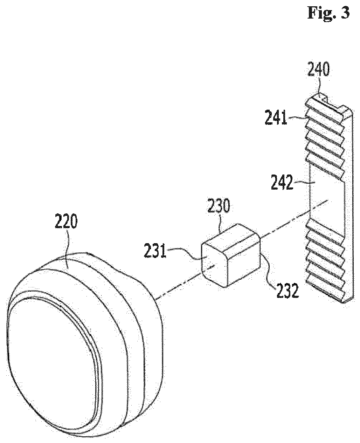

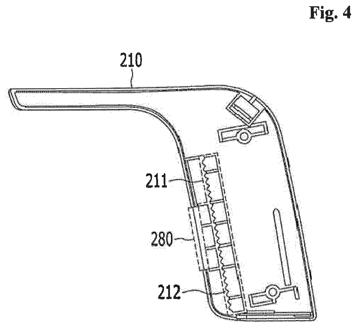

Specifically, the sound output unit 220 may be coupled to one end 231 (FIG. 3) of the coupling unit 230. Further, the other end 232 (FIG. 3) of the coupling unit 230 may be coupled to the sliding member 240. In this case, the coupling unit 230 may be positioned in an opening portion 280 (FIG. 4) provided in the housing 210. Therefore, the sound output unit 220 provided at one end of the coupling unit 230 may be positioned outside the housing 210. The sliding member 240 provided at the other end of the coupling unit 230 may be positioned inside the housing 210. Further, a partial region of the coupling unit 230 may be positioned inside the housing 210, and the remaining region of the coupling unit 230 may be positioned outside the housing 210. Hereinafter, the process of coupling the sound output unit 220, the coupling unit 230, and the sliding member 240 will be described below with reference to FIG. 3.

Meanwhile, when a communication unit (not illustrated) of the detachable module 200 receives sound data from an external terminal, the sound output unit 220 may outputs sound corresponding to the sound data. However, the method of outputting the sound from the sound output unit 220 is not limited to the above-mentioned example.

Meanwhile, the sliding member 240 may be a member that allows the sound output unit 220 to slide in one region of the housing 210. Here, one region is a space provided in the housing 210 and may be connected to the opening portion provided in the housing 210.

Meanwhile, the sliding member 240 has a first fixing portion 241 (FIG. 3) provided on a first surface of the sliding member 240. Here, the first surface may be a surface positioned in a direction in which the sliding member 240 faces the sound output unit 220. That is, the first surface may be a surface positioned in a direction in which the sliding member 240 faces the lens frame of the glasses.

Meanwhile, the first fixing portion 241 may be a fixing portion configured to fix the sliding member 240 to the housing 210. In addition, the housing 210 may have a second fixing portion 212 (FIG. 4) to be engaged with the first fixing portion 241 to fix the sliding member 240.

That is, the first fixing portion 241 (FIG. 3) provided on the sliding member 240 is provided on the first surface positioned in a direction opposite to the direction in which the electrical unit 250 is positioned, and the first fixing portion 241 (FIG. 3) and the second fixing portion 211 (FIG. 4) may be provided on a first inner surface of the housing that is in contact with the first surface of the sliding member. Therefore, when the first fixing portion 241 (FIG. 3) and the second fixing portion 211 (FIG. 4) remain engaged with each other, the sliding member 240 is stationary without moving within one region in the housing 210, such that the motion of the sound output unit 220 may be restricted.

Meanwhile, the first fixing portion 241 may have teeth formed on the first surface in order to fix the sliding member 240 to the housing 210. Here, the teeth may have a serrated shape in order to fix the sliding member 240. As another example, the tooth may have a rectangular parallelepiped shape. However, the shape of the first fixing portion 241 is not limited thereto.

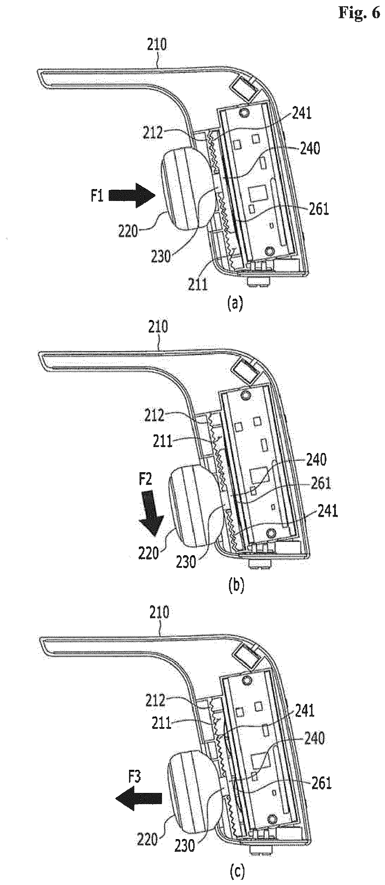

When the fixation (i.e., engagement) of the first fixing portion 241 and the second fixing portion 212 is released by external force, the sound output unit 220 may slide by means of the sliding member 240. That is, the restriction of the motion of the sound output unit 220 is released by external force, and the sound output unit may be moved vertically. This configuration will be described below in detail with reference to FIG. 6.

Meanwhile, the housing 210 may have an accommodation space 211 (FIG. 4) configured to accommodate therein the sliding member 240. In addition, the housing 210 may have an opening portion 280 (FIG. 4) opened to communicate with the accommodation space 211, and the coupling unit 230 may pass through the opening portion 280. Hereinafter, the shape of the housing 210 will be described below in detail with reference to FIG. 4.

Meanwhile, the electrical unit 250 may be provided in the housing 210.

In the present disclosure, electronic components configured to operate the detachable module 200 may be mounted on the electrical unit 250. The electronic components mounted on the electrical unit 250 may include a central processing unit (CPU), a main storage device configured to store data, and a cache memory configured to store temporarily data. The electronic components may be mounted in the housing 210 of the detachable module 200 by means of a main printed circuit board (PCB). However, the above-mentioned constituent elements are not essential to implement the electrical unit 250. The electrical unit 250 may have the constituent elements larger or smaller in number than the constituent elements listed above.

The sound output unit 220 may output sound data that the communication unit included in the electrical unit 250 receives from an external device. However, the present disclosure is not limited thereto. The sound output unit 220 may output sound data stored in a storage unit of the electrical unit 250.

The elastic member 260 is included in the housing 210 and may provide elastic force to the sliding member 240. Here, the elastic member 260 may be a flat spring configured to provide elastic force and restoring force by using bending deflection of a plate. However, the present disclosure is not limited thereto. The elastic member 260 may be a spiral spring.

Specifically, the elastic member 260 may provide elastic force to the sliding member 240 from a second surface of the sliding member 240 which faces the first surface of the sliding member 240. Here, the second surface may be a surface positioned in a direction in which the electrical unit 250 is positioned.

Meanwhile, by receiving elastic force from the elastic member 260, the first fixing portion 241 of the sliding member 240 may remain engaged with the second fixing portion 212 provided in the housing 210. In addition, when external force is applied to the elastic member 260 through the sound output unit 220, the first fixing portion 241 and the second fixing portion 212 may be disengaged.

Specifically, the user may apply external force to the sound output unit 220 in the direction in which the housing 210 is positioned. In this case, the sound output unit 220 may be pushed in the direction in which the housing 210 is positioned. That is, the external force applied to the sound output unit 220 may be transmitted to the elastic member 260 through the coupling unit 230 and the sliding member 240, thereby compressing the elastic member 260. Further, the sound output unit 220 may be pushed and inserted into the housing to the extent that the elastic member 260 is compressed. However, the present disclosure is not limited thereto. When the external force is applied to the sound output unit 220 by various methods, the sound output unit 220 may be pushed in the direction in which the housing 210 is positioned.

Meanwhile, the sliding member 240 may slide in the vertical direction when the external force, which moves the sound output unit 220, is transmitted to the sound output unit 220 from the user in the state in which the sound output unit 220 is pushed in the direction in which the housing 210 is positioned. Hereinafter, a method of sliding the sliding member 240 in the vertical direction will be described below with reference to FIG. 6.

The housing 210, the sound output unit 220, the coupling unit 230, the sliding member 240, and the elastic member 260 may be made of a plastic material such as high-density polyethylene (HDPE), polyvinyl chloride (PVC), polypropylene (PP), polyethylene (PE), acrylonitrile butadiene styrene copolymer (ABS), and polycarbonate acrylonitrile butadiene styrene (PC-ABS) copolymer. However, the present disclosure is not limited thereto, the housing 210, the sound output unit 220, the coupling unit 230, the sliding member 240, and the elastic member 260 may be made of steel.

The housing 210, the sound output unit 220, the coupling unit 230, the sliding member 240, and the elastic member 260 may be transparent by being made of a material such as polyethylene terephthalate (PET) or acrylic resin. Therefore, the user may easily ascertain, with the naked eye, whether the first fixing portion 241 and the second fixing portion 212 are engaged with each other. However, the present disclosure is not limited thereto.

Meanwhile, the shape of the user's ear may vary from users to users. According to the several exemplary embodiments of the present disclosure, the user may shift the position of the sound output unit 220. That is, the user may move the sound output unit 220 provided on the detachable module 200 to a position suitable for the user, thereby positioning the sound output unit 220 at a more convenient position.

FIG. 3 is an exploded perspective view of the sound output unit, the coupling unit, and the sliding member according to the several exemplary embodiments of the present disclosure.

Referring to FIG. 3, one end 231 of the coupling unit 230 may be coupled to the sound output unit 220.

As an example, one end 231 of the coupling unit 230 may be coupled to the sound output unit 220 by means of a bonding agent or the like.

As another example, an external thread (or internal thread) may be provided at one end 231 of the coupling unit 230, and an internal thread (or external thread) may be provided within a region of the sound output unit 220 which is in close contact with one end 231. Further, the external thread (or internal thread) formed at one end 231 of the coupling unit 230 and the internal thread (or external thread) provided within the region in close contact with one end 231 of the sound output unit 220 may be fastened and coupled to each other.

However, the coupling between the sound output unit 220 and the coupling unit 230 is not limited thereto, and the sound output unit 220 and the coupling unit 230 may be integrally formed.

Meanwhile, the other end 232 of the coupling unit 230 may be coupled to one region 242 of the first surface of the sliding member 240. Here, one region 242 may be a region positioned at a center of a vertical length of the sliding member 240. However, the present disclosure is not limited thereto. One region 242 may be present at another position on the first surface of the sliding member 240.

Meanwhile, the first surface of the sliding member 240 may have the first fixing portion 241 within a region except for one region 242. That is, the first fixing portions 241 may be provided within a first region of the first surface of the sliding member 240 which is positioned above one region 242, and a second region of the first surface of the sliding member 240 which is positioned below one region 242. That is, one region 242 to which the coupling unit 230 is coupled may be positioned between the first region and the second region. However, the present disclosure is not limited thereto.

Meanwhile, the other end 232 of the coupling unit 230 may be coupled to the sliding member 240.

As an example, the other end 232 of the coupling unit 230 may also be coupled to one region 242 of the sliding member 240 by means of a bonding agent or the like.

As another example, an external thread (or internal thread) may be provided to the other end 232 of the coupling unit 230, and an internal thread (or external thread) may be provided within one region 242 of the sliding member 240. Further, the external thread (or internal thread) provided at the other end 232 of the coupling unit 230 and the internal thread (or external thread) provided within one region 242 of the sliding member 240 may be fastened and coupled to each other.

However, the coupling between the coupling unit 230 and the sliding member 240 is not limited thereto, and the coupling unit 230 and the sliding member 240 may be integrally formed. In addition, the sound output unit 220, the coupling unit 230, and the sliding member 240 may be integrally formed.

Meanwhile, according to the several exemplary embodiments of the present disclosure, the sound output unit 220, the coupling unit 230, and the sliding member 240 may have the same internal thread at centers thereof. Further, the sound output unit 220, the coupling unit 230, and the sliding member 240 may be coupled at one time by means of a bolt or the like.

Meanwhile, the sliding member 240 may have the first fixing portion 241.

Specifically, the first fixing portion 241 having the teeth of a serrated shape may be provided on the first surface of the sliding member 240. However, the shape of the first fixing portion 241 is not limited to the serrated shape. The first fixing portion 241 may have a quadrangular or wave shape.

Meanwhile, the housing 210 may have therein the accommodation space 211 configured to accommodate the sliding member 240, and the opening portion 280 configured to allow a partial region of the coupling unit 230 to protrude to the outside of the housing 210. Hereinafter, the interior of the housing 210 will be described with reference to FIG. 4.

FIG. 4 is a view for explaining a housing of the detachable module according to the several exemplary embodiments of the present disclosure.

Referring to FIG. 4, the housing 210 may include therein the accommodation space 211, the second fixing portion 212, and the opening portion 280. However, the above-mentioned constituent elements are not essential to implement the housing 210. The housing 210 may have the constituent elements larger or smaller in number than the constituent elements listed above.

The accommodation space 211 may be a space that may accommodate the coupling unit 230 and the sliding member 240. That is, the coupling unit 230 and the sliding member 240 may move vertically in the accommodation space 211.

Meanwhile, the accommodation space 211 may have the second fixing portion 212 provided on the first inner surface in which the opening portion 280 is provided. Here, the first inner surface may be a surface facing the position of the electrical unit 250 (FIG. 2) in the accommodation space 211. That is, the first inner surface may be one surface in the accommodation space 211 where the second fixing portion 212 is in contact with the first surface of the sliding member 240 (FIG. 3).

Meanwhile, the second fixing portion 212 may be shaped to be engaged with the first fixing portion 241 and provide fixing force to the sliding member 240. Therefore, the second fixing portion 212 may have a shape corresponding to the shape of the first fixing portion 241.

For example, the second fixing portion 212 may have teeth that are serrated while having the same size as the teeth of the first fixing portion 241.

As another example, the second fixing portion 212 may be configured as an insertion hole into which the first fixing portion 241 may be inserted. Specifically, the conical teeth of the first fixing portion 241 may protrude (be recessed). In this case, the conical teeth of the second fixing portion 212 may be recessed (protrude) so as to correspond to the teeth of the first fixing portion 241.

However, the shapes of the first and second fixing portions 241 and 212 are not limited to the above-mentioned examples.

In the present disclosure, a vertical length of the accommodation space 211 may be longer than a vertical length of the sliding member 240. Specifically, if the vertical length of the accommodation space 211 is equal to or shorter than the vertical length of the sliding member 240, the sliding member 240 cannot be moved in the housing 210. Therefore, the vertical length of the accommodation space 211 may be longer than the vertical length of the sliding member 240.

In addition, in the present disclosure, a vertical length of the first fixing portion 241 of the sliding member 240 may be shorter than a vertical length of the second fixing portion 212 of the accommodation space 211. Specifically, if the vertical length of the second fixing portion 212 is equal to or shorter than the vertical length of the first fixing portion 241, there is a lack of fixing force for fixing the sliding member 240 as the first fixing portion 241 and the second fixing portion 212 are engaged with each other. Therefore, a vertical length of the second fixing portion 212 may be longer than a vertical length of the first fixing portion 241. However, the vertical lengths of the first and second fixing portions 241 and 212 are not limited to the above-mentioned examples.

When the housing 210 is attached to the glasses, the opening portion 280 may be positioned in a front surface of the housing 210. Here, the front surface of the housing 210 may be a surface provided in the direction in which the glasses are positioned. Therefore, the sound output unit 220 may be positioned on the front surface of the housing 210 where the glasses are positioned.

When the sound output unit 220 is coupled to the housing 210, one end 231 of the coupling unit 230 may be positioned outside the housing 210, and the other end 232 of the coupling unit 230 may pass through the opening portion 280 and then be provided in the housing 210. That is, only a partial region of the coupling unit 230 may pass through the opening portion 280 and then be provided in the housing 210.

Meanwhile, the sound output unit 220 coupled to the coupling unit 230 is coupled to the housing 210 and may slide by the vertical length of the opening portion 280. In this case, a vertical length of a cross-sectional area of the coupling unit 230 may be shorter than the vertical length of the opening portion 280.

Meanwhile, since the accommodation space 211, the second fixing portion 212, and the opening portion 280 are provided in the housing 210 as described above, the sound output unit 220 of the detachable module 200 may slide in the vertical direction.

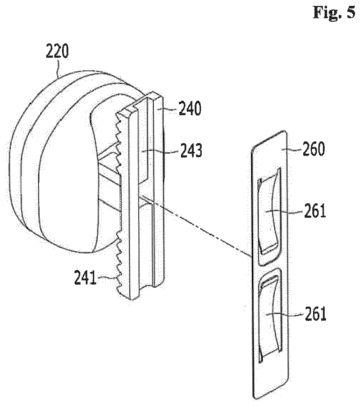

FIG. 5 is a view for explaining an example of a method of providing fixing force to the sound output unit according to the several exemplary embodiments of the present disclosure.

According to the present disclosure, the sound output unit 220 may be coupled to the sliding member 240 by means of the coupling unit 230. In addition, the sliding member 240 may have the first fixing portion 241 provided on the first surface of the detachable module, and the first fixing portion 241 may be engaged with the second fixing portion 212 of the housing 210. In this case, the engagement between the first fixing portion 241 and the second fixing portion 212 may be maintained by elastic force of the elastic member 260.

Specifically, referring to FIG. 5, the sliding member 240 may have a guide portion 243. Here, the guide portion 243 may be a vertical groove to which at least a part of the elastic member 260 is coupled. That is, the guide portion 243, which is formed in the vertical direction of the sliding member 240, may be provided on the second surface of the sliding member 240. Here, the second surface may be a surface opposite to the first surface on which the first fixing portion 241 is provided.

The elastic member 260 may have at least one flat spring 261.

Specifically, the elastic member 260 may have at least one flat spring 261 inserted into the guide portion 243 of the sliding member 240 in order to provide elastic force in a direction from the second surface to the first surface of the sliding member 240.

In the present disclosure, at least one flat spring 261 of the elastic member 260 may have an arcuate shape. That is, at least one flat spring 261 may be a compressive spring that is compressed by external force and restored when the external force is eliminated. However, the present disclosure is not limited thereto. A tensile spring may be applied in accordance with the shape of the sliding member 240.

Specifically, at least one flat spring 261 may have an arcuate shape, and an arch crown of the arcuate shape may be inserted into the guide portion 243. However, the shape of the flat spring 261 is not limited to the above-mentioned example.

Meanwhile, the flat spring 261 of the elastic member 260 may be positioned on a second inner surface of the accommodation space 211 which faces the first inner surface of the accommodation space 211 of the housing 210. Here, the second inner surface may be one surface in the accommodation space 211 which faces the first inner surface. The second fixing portion 212, which is engaged with the first fixing portion 241 provided on the sliding member 240, is provided on the first inner surface, and the elastic member 260 is provided on the second inner surface facing the first inner surface. Therefore, if no external force is applied, the engagement between the first fixing portion 241 and the second fixing portion 212 may be maintained by the restoring force (or elastic force) of the elastic member 260.

Meanwhile, the elastic member 260 may be fixedly coupled to the second inner surface of the housing 210. Further, the flat spring 261 of the elastic member 260 is inserted into the guide portion 243 provided in the sliding member 240, such that the sliding member 240 is prevented from deviating in a horizontal direction when the sliding member 240 slides in the vertical direction.

That is, since the flat spring 261 of the elastic member 260 fixedly coupled to the housing 210 is inserted into the guide portion 243 provided in the sliding member 240, the sliding member 240 may move only in the vertical direction.

Therefore, the sliding member 240 may stably receive the elastic force from the flat spring 261 of the elastic member 260.

Meanwhile, since the elastic member 260 has at least one flat spring 261, it is possible to prevent a clearance from being formed between the first fixing portion 241 of the sliding member 240 and the second fixing portion 212 of the housing 210.

Specifically, with at least one flat spring 261, the elastic member 260 may provide the same elastic force to upper and lower sides of the sliding member 240 having the long vertical length. In addition, the first fixing portion 241 of the sliding member 240, of which the upper and lower sides thereof receive the elastic force from the elastic member 260, is accurately engaged with the second fixing portion 212 of the housing 210, such that it is possible to prevent a fluid or dust from being introduced into the housing 210. Therefore, a waterproof effect may be achieved, and the electrical unit 250 may be prevented from being damaged by rainwater, the user's sweat, dust, or the like. However, the present disclosure is not limited thereto.

Meanwhile, since the detachable module 200 has the elastic member 260, the sound output unit 220 may be fixed when the external force applied to the sound output unit 220 is eliminated.

According to the several exemplary embodiments of the present disclosure, an elastic modulus of the flat spring 261 has a predetermined value or more.

For example, the predetermined value may be a value set when the flat spring 261 is not compressed by the ear when the user wears the glasses 100 attached with the detachable modules. However, the predetermined value is not limited thereto.

That is, since the detachable module 200 has at least one flat spring 261 having the elastic modulus having the predetermined value or more, it is possible to prevent the first fixing portion 241 and the second fixing portion 212 from being disengaged from each other without the user's external force. Therefore, the sound output unit 220 of the detachable module 200 may not slide when no external force is applied from the user.

Meanwhile, according to the present disclosure, when the flat spring 261 of the elastic member 260 is compressed by the user's external force, the first fixing portion 241 and the second fixing portion 212 may be disengaged from each other. Further, the user may move the sound output unit 220 in the vertical direction by applying external force. Hereinafter, an example of a method of shifting the position of the sound output unit 220 by the user will be described with reference to FIG. 6.

FIG. 6 is a view for explaining an example of a method of moving the sound output unit according to the several exemplary embodiments of the present disclosure.

Referring to FIG. 6A, when first external force F1 is applied, the sound output unit 220 of the detachable module 200 may be inserted by a predetermined length in a direction in which the first external force F1 is applied. Here, the predetermined length may be associated with the flat spring 261 of the elastic member 260. Specifically, the predetermined length may correspond to a height of the arch crown formed on the flat spring 261.

When the sound output unit 220 is inserted by the predetermined length, the first fixing portion 241 of the sliding member 240 and the second fixing portion 212 of the housing 210 may be disengaged from each other. Therefore, the sound output unit 220, the coupling unit 230, and the sliding member 240 may slide in the vertical direction of the housing 210.

Specifically, referring to FIG. 6B, when second external force F2 is applied by the user, the sound output unit 220 may move in a direction in which the second external force F2 is applied.

For example, when the user applies external force toward a lower side of the housing 210 as illustrated in FIG. 6B, the sound output unit 220 may be moved toward the lower side of the housing 210.

Meanwhile, the sound output unit 220 may move in the vertical direction by a difference between the vertical length of the cross-sectional area of the coupling unit 230 and the vertical length of the opening portion 280. In addition, the sound output unit 220 may move in the vertical direction by a difference between the vertical length of the first fixing portion 241 and the vertical length of the second fixing portion 212.

Therefore, the user may move the sound output unit 220 of the detachable module 200 to a height suitable for the user.

When the user eliminates the external force, the elastic member 260 of the detachable module 200 may provide restoring force F3.

Specifically, at least one flat spring 261 provided on the elastic member 260 may provide the restoring force F3 in a direction opposite to the direction of the first external force F1.

Therefore, the first fixing portion 241 provided on the sliding member 240 may be engaged again with the second fixing portion 212 fixed to the housing 210. In addition, since the first fixing portion 241 and the second fixing portion 212 are engaged with each other, the sound output unit 220 may be fixed at a position desired by the user.

Meanwhile, when the user adjusts the position of the sound output unit 220 through the above-mentioned operations, the sound output unit 220 may be fixed as the user just slides the sound output unit 220 while pushing the sound output unit 220 toward the housing 210 and then takes his/her hand off the sound output unit 220.

The description of the presented exemplary embodiments is provided to enable any person skilled in the art of the present disclosure to make or use the present disclosure. Various modifications to the exemplary embodiments will be apparent to those skilled in the art of the present disclosure, and the generic principles defined herein may be applied to other exemplary embodiments without departing from the scope of the present disclosure. Accordingly, it should be construed that the present disclosure is not be limited to the exemplary embodiments presented herein but is in the broadest scope consistent with the principles and novel features presented herein.

## Claims

1. A detachable module comprising:
a sliding member having a first fixing portion provided on a first surface of the detachable module;
a sound output unit configured to output sound;
a coupling unit having one end coupled to the sound output unit, and the other end coupled to one region of the first surface of the sliding member;
a housing configured to be detachably attached to a temple of glasses and having an accommodation space configured to accommodate the sliding member, and an opening portion opened to communicate with the accommodation space and allow the coupling unit to pass therethrough, wherein the accommodation space has a second fixing portion configured to be engaged with the first fixing portion; and
an elastic member disposed on a second surface of the sliding member, facing the first surface of the sliding member, and configured to provide elastic force to the sliding member so as to maintain the engagement between the first fixing portion and the second fixing portion.

2. The detachable module of claim 1, wherein the second fixing portion is provided on a first inner surface of the accommodation space in which the opening portion is provided, and the elastic member is positioned on a second inner surface of the accommodation space that faces the first inner surface of the accommodation space.

3. The detachable module of claim 1 or 2, wherein a shape of the second fixing portion corresponds to a shape of the first fixing portion.

4. The detachable module of claim 2 or 3, wherein the first fixing portion comprises teeth formed on the first surface of the sliding member, and the second fixing portion comprises teeth formed on the first inner surface in the accommodation space.

5. The detachable module of any one of claims 1 to 4, wherein the housing defines a L-shaped external appearance, and when the housing is attached to the glasses, the opening portion is positioned in a front surface of the housing where the glasses are positioned.

6. The detachable module of any one of claims 1 to 5, wherein the sliding member has a guide portion formed in the second surface in a vertical direction of the sliding member, and the elastic member is inserted into the guide portion.

7. The detachable module of claim 6, wherein the sliding member slides in a first direction along the guide portion or in a second direction opposite to the first direction when external force is applied in a direction from the sound output unit to the housing and the first fixing portion and the second fixing portion are disengaged from each other.

8. The detachable module of any one of claims 1 to 7, wherein a vertical length of the accommodation space is longer than a vertical length of the sliding member.

9. The detachable module of any one of claims 1 to 8, wherein the elastic member comprises at least one flat spring having an arcuate shape.

10. The detachable module of any one of claims 1 to 9, wherein a vertical length of the first fixing portion is shorter than a vertical length of the second fixing portion.

11. The detachable module of any one of claims 1 to 10, wherein a vertical length of a cross-sectional area of the coupling unit is shorter than a vertical length of the opening portion.
